# EUROPEAN PATENT APPLICATION

(11) **EP 4 360 744 A1**
(43) Date of publication of application: **01.05.2024**
(21) Application number: 22828846.0
(22) Date of filing: 18.05.2022
(51) Int. Cl.: B01D 71/68, B01D 71/58, B01D 71/52, B01D 69/10, B01D 69/12, B01D 61/14, B01D 61/02, B01D 67/00

(54) **SEPARATION MEMBRANE WITH EXCELLENT FOULING RESISTANCE AND METHOD FOR MANUFACTURING SAME**

(30) Priority: 25.06.2021 KR 20210083161
(71) Applicant: Toray Advanced Materials Korea Inc., Gumi-si, Gyeongsangbuk-do 39389 (KR)
(72) Inventor: LIM, Jae Won, Gumi-si, Gyeongsangbuk-do 39389 (KR)
(74) Representative: Piticco, Lorena
(86) International application number: PCT/KR2022/095101
(87) International publication number: WO 2022/270999

(57) **Abstract**

The present invention relates to: a separation membrane with excellent fouling resistance which, by coating the surface of a support with a polymer solution including a hydrophobic polymer, a hydrophilic polymer, and a sulfonated polymer, has excellent fouling resistance and flow rate and no deterioration in exclusion rate performance; and a method for manufacturing same.

## Description

### [Technical Field]

The present invention relates to a separation membrane with excellent fouling resistance and a manufacturing method thereof.

### [Background Art]

Conventional separation membranes can separate various dissolved substances that are dissociated from surface water or seawater from solvents by using various selective membranes, and such membranes include microfiltration separation membranes, ultrafiltration separation membranes, nano-separation membranes, reverse osmosis membranes and the like. In order to remove salt from surface water and seawater and utilize the same as drinking water, agricultural water and industrial water, research on how to separate substances at the molecular level is being actively conducted, and among this research, much research is being conducted on the methods of adding sulfonated polymers.

However, the conventional method of adding a sulfonated polymer has been shown to be effective in improving the flux and fouling resistance, but has a problem in that the exclusion rate of the separation membrane is lowered, and the situation is that research for improvement thereof is insufficient.

As an example thereof, Korean Patent Application Laid-Open No. 10-2013-0037387 manufactured a separation membrane by using a sulfonated polymer membrane, but the separation membrane manufactured in this way has a problem in that the salt exclusion rate greatly decreases, and thus, the situation is that there is an urgent need for research on a separation membrane which has an excellent flux and in which the exclusion rate is not reduced by introducing a sulfonated polymer at an appropriate ratio.

### [Disclosure]

### [Technical Problem]

The separation membrane with excellent fouling resistance according to the present invention for solving the above-described problems is directed to providing a separation membrane with excellent fouling resistance which not only has a very excellent flux and fouling resistance, but also in which the exclusion rate is not reduced, by coating the separation membrane with a sulfonated polymer solution, and a manufacturing method thereof.

### [Technical Solution]

In order to solve the above-described problems, the present invention provides a separation membrane with excellent fouling resistance, including a support; and a coating film which is formed on at least one surface of the support, wherein the coating film includes a mixed polymer including a hydrophobic polymer, a sulfonated polymer and a hydrophilic polymer, wherein the sulfonated polymer is included in the mixed polymer at 0.002 to 0.500 wt.%, and wherein when operated for 50 to 70 minutes under a polyethylene glycol solution with a concentration of 100 to 5,000 ppm at a temperature of 20°C to 30°C and a pressure of 40 to 60 psi, the separation membrane has a flux of 63 gfd (gal/ft²·day) or more and a polyethylene glycol exclusion rate of 90% or more.

In a preferred exemplary embodiment of the present invention, the sulfonated polymer may include at least one selected from sulfonated polysulfone and sulfonated polyethersulfone.

In a preferred exemplary embodiment of the present invention, the hydrophobic polymer may include at least one selected from polysulfone and polyethersulfone.

In a preferred exemplary embodiment of the present invention, the hydrophilic polymer may include at least one selected from polyethylene glycol and polyvinyl pyrrolidone.

In a preferred exemplary embodiment of the present invention, the hydrophobic polymer may be included at 85 to 95 wt.% of the total weight of the mixed polymer.

In a preferred exemplary embodiment of the present invention, the separation membrane may be a nano-separation membrane, an ultrafiltration separation membrane or a microfiltration separation membrane.

In a preferred exemplary embodiment of the present invention, the upper surface contact angle of the separation membrane may be 20° to 50°.

As another object of the present invention, the present invention provides a method for manufacturing a separation membrane with excellent fouling resistance, including the steps of preparing a polymer solution including a mixed polymer including a hydrophobic polymer, a sulfonated polymer and a hydrophilic polymer, and a solvent; forming a coating film by coating at least one surface of the support with the polymer solution and then immersing in distilled water; and drying the support on which the coating film is formed.

In a preferred exemplary embodiment of the present invention, the solvent may include at least one selected from dimethylacetamide, N-methyl-2-pyrrolidone, dimethylformamide and dimethyl sulfoxide.

In a preferred exemplary embodiment of the present invention, the sulfonated polymer may have a sulfonation degree of 0.25 to 0.50.

### [Advantageous Effects]

Through the present invention, it is possible to manufacture a separation membrane with excellent fouling resistance, which not only has an excellent flux and fouling resistance, but also in which the exclusion rate is not reduced.

### [Modes of the Invention]

Hereinafter, the present invention will be described in more detail through the method for manufacturing a separation membrane with excellent fouling resistance according to the present invention.

The method for manufacturing a separation membrane with excellent fouling resistance may include a first step of preparing a polymer solution including a mixed polymer including a hydrophobic polymer, a sulfonated polymer and a hydrophilic polymer, and a solvent; a second step of forming a coating film by coating at least one surface of the support with the polymer solution and then immersing in distilled water (DI); and a third step of drying the support on which the coating film is formed.

If the sum of the hydrophobic polymer, the sulfonated polymer and the hydrophilic polymer is defined as a "mixed polymer," the polymer solution in the first step may include 20 to 36 wt.% of the mixed polymer and the remaining amount of the solvent, and preferably include 23 to 33 wt.% of the mixed polymer and the remaining amount of the solvent.

If the mixed polymer at included at less than 20 wt.%, there may be a problem of low removal performance of the separation membrane, and if it exceeds 36 wt.%, it may be difficult to form the separation membrane due to the high viscosity of the polymer solution, and there may be a problem in that the flux of the separation membrane rapidly decreases due to the high content of the mixed polymer.

Hereinafter, each constitution of the mixed polymer will be described in detail.

First of all, the hydrophobic polymer may include at least one selected from polysulfone and polyethersulfone, and more preferably, polyethersulfone.

In addition, the hydrophobic polymer may be included at 85 to 95 wt.%, and preferably, 86 to 94 wt.%, based on the total weight of the mixed polymer.

Meanwhile, the sulfonated polymer may include at least one selected from sulfonated polysulfone and sulfonated polyethersulfone, and more preferably, sulfonated polyethersulfone.

In addition, the sulfonated polymer may be included at 0.002 to 0.5000 wt.%, and preferably, 0.0035 to 0.3500 wt.%, based on the total weight of the mixed polymer.

In this case, if the sulfonated polymer is included at less than 0.002 wt.%, the flux is greatly reduced after a certain period of time after operation, resulting in poor fouling resistance, and if it is included at more than 0.500 wt.%, there is a problem in that the exclusion rate of polyethylene glycol is significantly reduced, and thus, it is essential to use an appropriate amount of sulfonated polymer in order to maintain both of the flux and the polyethylene exclusion rate at excellent levels.

In addition, the sulfonated polymer may have a sulfonation degree of 0.25 to 0.50, and preferably, 0.30 to 0.45. In this case, the sulfonation degree means the ratio of sulfonated repeating units to the total number of moles of sulfonated polymer, and if the sulfonation degree is less than 0.25, there may be a problem in that the fouling resistance of the separation membrane cannot be improved, and if it exceeds 0.50, there may be a problem in that the exclusion rate of polyethylene glycol is significantly reduced.

In addition, the sulfonated polymer may have a weight average molecular weight (Mw) of 100,000 to 180,000, and preferably, 110,000 to 170,000.

If the weight average molecular weight is less than 100,000, it may be difficult to synthesize the sulfonated polymer, and if it exceeds 180,000, the viscosity of the polymer solution may increase, and it may be difficult to form a separation membrane.

Meanwhile, the hydrophilic polymer may include at least one selected from polyethylene glycol and polyvinyl pyrrolidone, and more preferably, polyvinyl pyrrolidone.

In addition, the hydrophilic polymer may be included in a remaining amount excluding the hydrophobic polymer and the hydrophilic polymer in the total weight of the mixed polymer.

Meanwhile, the solvent may include at least one selected from dimethylacetamide, N-methyl-2-pyrrolidone, dimethylformamide and dimethyl sulfoxide, and preferably, it may include dimethylacetamide.

The polymer solution prepared in the first step as described above may be a simple mixture of a hydrophobic polymer, a sulfonated polymer and a hydrophilic polymer without crosslinking or reaction.

Next, the coating in the second step may be performed by performing dipping, spraying, drop casting, self-assembly, spin coating, doctor blade, bar coating, slot die coating, microgravure coating, coma coating, printing or casting method on at least one surface of the support.

In addition, the support may include at least one selected from a polyester-based support, a polyethylene-based support and a polypropylene-based support, and preferably, it may be a polyester-based support.

In addition, the physical properties of the membrane may be adjusted according to the porosity and hydrophilicity of the support.

In this case, in order to implement excellent physical properties of the membrane, the support may have an air permeation amount of 2 cc/cm²·sec or more, and preferably, it may have an air permeation amount of 2 to 20 cc/cm²·sec. The average pore diameter of may be 1 to 600 µm, and preferably, 5 to 300 µm. When the air permeability and average pore diameter conditions are satisfied, water inflow and water permeability may be increased.

In addition, the support may have a thickness of 20 to 150 µm, and if the thickness is less than 20 µm, the strength of the entire membrane may decrease, and if the thickness exceeds 150 µm, the flux may decrease.

Next, the formation of the coating film in the second step may be performed by immersing the support coated with the polymer solution in distilled water for 10 to 120 minutes, and preferably, it may be performed by immersing for 30 to 60 minutes.

In this case, the distilled water may be at 15 to 30°C, and preferably, 18 to 25°C.
Next, the drying in the third step may be performed at 25 to 100°C for 0.5 to 5 minutes, and preferably, at 60 to 90°C for 1 to 3 minutes.

In this case, the drying may be performed by one method selected from hot air drying and natural drying.

Hereinafter, the separation membrane with excellent fouling resistance which is manufactured by the above-described method for manufacturing a separation membrane with excellent fouling resistance will be described.

In the description of the separation membrane to be described below, the part described in the above-described manufacturing method will be omitted.

The separation membrane with excellent fouling resistance of the present invention may include a support; and a coating film which is formed on at least one surface of the support.

In this case, the coating film may include a hydrophobic polymer; a sulfonated polymer; and a hydrophilic polymer.

In this case, the separation membrane may be a nano-separation membrane, an ultrafiltration separation membrane or a microfiltration separation membrane, but preferably, it may be an ultrafiltration separation membrane.

When the physical properties of the separation membrane are described, first of all, the separation membrane may have an upper surface contact angle of 20° to 50°, and preferably, 30° to 40°.

If the upper surface contact angle is less than 20°, there may be a problem in that the exclusion rate of the separation membrane decreases, and if it exceeds 50°, there may be a problem in that the flux of the separation membrane decreases.

Meanwhile, the conventional separation membrane has a problem in that both of the flux and the polyethylene glycol exclusion rate are not implemented at excellent levels when it is operated under a polyethylene glycol solution.

In the present invention, the flux and fouling resistance are excellent even under a polyethylene glycol solution, and when operated under the test conditions described below, the flux of the separation membrane may be 63 gfd (gal/ft²·day) or more, preferably, 65 gfd or more, and more preferably, 65.5 to 120 gfd or more.

In addition, the separation membrane may have a polyethylene exclusion rate of 90% or more, and preferably, 95% or more.

In this case, the test conditions may mean that the separation membrane is operated for 50 to 70 minutes under a polyethylene glycol solution with a concentration of 100 to 5,000 ppm at a temperature of 20°C to 30°C and a pressure of 40 to 60 psi, and preferably, they may mean operating for 55 to 65 minutes under a polyethylene glycol solution with a concentration of 500 to 4,000 ppm at a temperature of 22°C to 28°C and a pressure of 45 to 55 psi.

Hereinafter, the present invention will be described through the following examples. In this case, the following examples are only presented to illustrate the invention, and the scope of the present invention is not limited by the following examples.

### [Example]

### Example 1: Manufacture of separation membrane with excellent fouling resistance

A polymer solution including 28 wt.% of a mixed polymer and the remaining amount of a solvent was prepared.

In this case, the mixed polymer included 89.2 wt.% of polyethersulfone, 0.035 wt.% of sulfonated polyethersulfone having a sulfonation degree of 0.35 and the remaining amount of polyvinylpyrrolidone.

In addition, the weight average molecular weight (Mw) of the sulfonated ether sulfone is 143,000.

In this case, dimethylacetamide was used as the solvent.

Next, the polymer solution was coated on one surface of a polyester-based support having a horizontal length, vertical length and thickness of 150 mm × 250 mm × 0.09 mm by bar coating such that the thickness of the coating film was 0.13 mm by including the support.

Next, the support was immersed in distilled water (DI water) to form a coating film.

Next, the support on which the coating film was formed was dried at 90°C for 2 minutes to manufacture a separation membrane with excellent fouling resistance.

### Example 2 to Example 8 and Comparative Example 1 to Comparative Example 8: Manufacture of separation membranes with excellent fouling resistance

Separation membranes with excellent fouling resistance were manufactured in the same manner as in Example 1, except that Examples 2 to 8 and Comparative Examples 1 to 8 were performed under the conditions shown in Tables 1 to 5 below.

### Experimental Example 1: Evaluation of physical properties of separation membranes

The physical properties of the separation membranes with excellent fouling resistance manufactured in Examples 1 to 8 and Comparative Examples 1 to 8 were evaluated in the following manner, and the results are shown in Tables 1 to 4 below.

### (1) Measurement of upper surface contact angle (wettability)

In order to measure wettability to water, the contact angle between the film surface and water droplets was measured by using a contact angle (°) measuring device. After photographing the shape of liquid droplets with a CCD camera, the method of calculating the interfacial tension (γ) optimized for the shape of the finally imaged droplets was used. The injection volume was set to 0.05 mL through a micro-syringe, and secondary distilled water was used. Since errors in the contact angle may occur depending on the chemical non-uniformity and roughness of the membrane surface, the experiment was performed in a range such that the error range did not exceed ±2° at the maximum through analysis over 10 times.

### (2) Measurement of flux and exclusion rate

When the separation membrane was operated for 60 minutes under a polyethylene glycol solution with a concentration of 1,000 ppm at a temperature of 25°C and a pressure of 50 psi, the flux and the polyethylene glycol exclusion rate were measured.

### (3) Evaluation of fouling resistance

For the separation membrane, Under the condition of time operation, the flux reduction rate compared to the initial flux was evaluated under the conditions of operating for 24 hours at 25°C and 50 psi in a 2,000 ppm sodium chloride aqueous solution respectively including 50 ppm of dry milk, 5 ppm of dodecyltrimethylammonium bromide (DTAB) and 50 ppm of sodium dodecyl sulfate (SDS) independently of each other

In this case, the flux reduction rate was calculated through Relationship Formula 1 below. Flux reduction rate (%) = (Flux after 24 hours of operation - Initial flux)/ Initial flux × 100(%)

**[Table 1]**

| | | | | | | Example 1 | Example 2 | Example 3 | Example 4 |
|---|---|---|---|---|---|---|---|---|---|
| M an uf act uri ng m et ho d | Po ly m er sol uti on | Mi xe d po ly m er | Hydropho bic polymer | | Type | Polyether sulfone | Polyether sulfone | Polyether sulfone | Polyether sulfone |
| | | | | | Content (wt.%) | 89.25 | 89.28 | 88.92 | 89.25 |
| | | | Sulfonate d polymer | | Type | sulfonated polyether sulfone | sulfonated polyether sulfone | sulfonated polyether sulfone | sulfonated polyether sulfone |
| | | | | | Sulfonatio n degree | 0.35 | 0.35 | 0.35 | 0.35 |
| | | | | | Content (wt.%) | 0.035 | 0.0035 | 0.35 | 0.035 |
| | | | Hydrophil ic polymer | | Type | polyvinyl pyrrolidone | polyvinyl pyrrolidone | polyvinyl pyrrolidone | polyvinyl pyrrolidone |
| | | | | | Content (wt.%) | Remaining amount | Remaining amount | Remaining amount | Remaining amount |
| | | Content (wt.%) | | | | 28 | 28 | 28 | 28 |
| | | Sol ven t | Type | | | Dimethyl acetamide | Dimethyl acetamide | Dimethyl acetamide | Dimethyl acetamide |
| | | | Content (wt.%) | | | 72 | 72 | 72 | 72 |
| Se pa rat io n m e m br an e | Upper surface contact angle (°) | | | | | 35 | 56 | 32 | 35 |
| | Flux (gfd(gal/ft²·day) | | | | | 65.5 | 63.4 | 73.2 | 65.6 |
| | Exclusion rate (%) | | | | | 96.19 | 96.15 | 91.35 | 96.61 |
| | Flux reduction rate (%) | | | Dry milk | | -4.32 | -9.24 | -3.89 | -7.15 |
| | | | | DTAB | | -35.21 | -41.11 | -34.47 | -38.42 |
| | | | | SDS | | -12.46 | -16.42 | -11.23 | -16.48 |
| | | | | Triton-X 100 | | -3.92 | -6.53 | -3.25 | -5.42 |

**[Table 2]**

| | | | | | Example 5 | Example 6 | Example 7 | Example 8 |
|---|---|---|---|---|---|---|---|---|
| M an uf act uri ng m et ho d | Po ly m er sol uti on | Mi xe d po ly m er | Hydropho bic polymer | Type | Polyether sulfone | Poly sulfone | Polyether sulfone | Polyether sulfone |
| | | | | Content (wt.%) | 89.25 | 89.25 | 89.25 | 89.25 |
| | | | Sulfonate d polymer | Type | sulfonated polyether sulfone | Sulfonated polysulfone | sulfonated polyether sulfone | sulfonated polyether sulfone |
| | | | | Sulfonatio n degree | 0.45 | 0.35 | 0.35 | 0.35 |
| | | | | Content (wt.%) | 0.035 | 0.035 | 0.035 | 0.035 |
| | | | Hydrophil ic polymer | Type | polyvinyl pyrrolidone | polyethylene glycol | polyvinyl pyrrolidone | polyvinyl pyrrolidone |
| | | | | Content (wt.%) | Remaining amount | Remaining amount | Remaining amount | Remaining amount |
| | | Content (wt.%) | | | 28 | 28 | 23 | 33 |
| | | Sol ven t | Type | | Dimethyl acetamide | Dimethyl acetamide | Dimethyl acetamide | Dimethyl acetamide |
| | | | Content (wt.%) | | 72 | 72 | 77 | 67 |
| Se pa | Upper surface contact angle (°) | | | | 35 | 35 | 35 | 35 |
| | Flux (gfd(gal/ft²·day) | | | | 65.4 | 63.0 | 143.8 | 63.2 |
| rat io n m e m br an e | Exclusion rate (%) | | 92.45 | 94.25 | 89.98 | 96.64 | | |
| | Flux reduction rate (%) | Dry milk | -4.25 | -5.39 | -8.56 | -3.51 | | |
| | | DTAB | -34.16 | -37.85 | -43.22 | -33.63 | | |
| | | SDS | -11.93 | -14.56 | -18.62 | -11.77 | | |
| | | Triton-X 100 | -3.02 | -5.08 | -8.65 | -2.90 | | |

**[Table 3]**

| | | | | | | Comparative Example 1 | Comparative Example 2 | Comparative Example 3 | Comparative Example 4 |
|---|---|---|---|---|---|---|---|---|---|
| M an uf act uri ng m et ho d | Po ly m er sol uti on | Mi xe d po ly m er | Hydropho bic polymer | | Type | Polyether sulfone | Polyether sulfone | Polyether sulfone | Polyether sulfone |
| | | | | | Content (wt.%) | 89.28 | 88.58 | 87.5 | 89.25 |
| | | | Sulfonate d polymer | | Type | sulfonated polyether sulfone | sulfonated polyether sulfone | sulfonated polyether sulfone | sulfonated polyether sulfone |
| | | | | | Sulfonatio n degree | 0.35 | 0.35 | 0.35 | 0.10 |
| | | | | | Content (wt.%) | 0.001 | 0.71 | 1.79 | 0.035 |
| | | | Hydrophil ic polymer | | Type | polyvinyl pyrrolidone | polyvinyl pyrrolidone | polyvinyl pyrrolidone | polyvinyl pyrrolidone |
| | | | | | Content (wt.%) | Remaining amount | Remaining amount | Remaining amount | Remaining amount |
| | | Content (wt.%) | | | | 28 | 28 | 28 | 28 |
| | | Sol ven t | Type | | | Dimethyl acetamide | Dimethyl acetamide | Dimethyl acetamide | Dimethyl acetamide |
| | | | Content (wt.%) | | | 72 | 72 | 72 | 72 |
| Se pa rat io n m e m br an e | Upper surface contact angle (°) | | | | | 62 | 29 | 25 | 35 |
| | Flux (gfd(gal/ft²·day) | | | | | 55.6 | 95.8 | 125.1 | 65.6 |
| | Exclusion rate (%) | | | | | 96.21 | 93.82 | 72.56 | 97.18 |
| | Flux reduction rate (%) | | | Dry milk | | -18.96 | -3.25 | -3.05 | -16.22 |
| | | | | DTAB | | -59.65 | -34.47 | -32.48 | -46.11 |
| | | | | SDS | | -28.84 | -10.74 | -8.96 | -25.69 |
| | | | | Triton-X 100 | | -12.69 | -2.96 | -2.96 | -10.55 |

**[Table 4]**

| | | | | | Comparative Example 5 | Comparative Example 6 | Comparative Example 7 | Comparative Example 8 | |
|---|---|---|---|---|---|---|---|---|---|
| M an uf act uri ng m et ho d | Po ly m er sol uti on | Mi xe d po ly m er | Hydropho bic polymer | Type | Polyether sulfone | Polyether sulfone | Polyether sulfone | Polyether sulfone | |
| | | | | Content (wt.%) | 89.25 | 89.25 | 89.25 | 75.34 | |
| | | | Sulfonate d polymer | Type | sulfonated polyether sulfone | sulfonated polyether sulfone | sulfonated polyether sulfone | sulfonated polyether sulfone | |
| | | | | Sulfonatio n degree | 0.60 | 0.35 | 0.35 | 0.35 | |
| | | | | Content | 0.035 | 0.035 | 0.035 | 0.035 | |
| | | | | | (wt.%) | | | | |
| | | | Hydrophil ic polymer | | Type | polyvinyl pyrrolidone | polyvinyl pyrrolidone | polyvinyl pyrrolidone | polyvinyl pyrrolidone |
| | | | | | Content (wt.%) | Remaining amount | Remaining amount | Remaining amount | Remaining amount |
| | | Content (wt.%) | | | | 28 | 10 | 50 | 28 |
| | | Sol ven t | Type | | | Dimethyl acetamide | Dimethyl acetamide | Dimethyl acetamide | Dimethyl acetamide |
| | | | Content (wt.%) | | | 72 | 90 | 50 | 72 |
| Se pa rat io n m e m br an e | Upper surface contact angle (°) | | | | | 36 | 37 | Not measurable | 51 |
| | Flux (gfd(gal/ft²·day) | | | | | 65.3 | 271.4 | | 148.2 |
| | Exclusion rate (%) | | | | | 82.34 | 42.48 | | 85.34 |
| | Flux reduction rate (%) | | | Dry milk | | -3.78 | -19.92 | | -12.56 |
| | | | | DTAB | | -33.54 | -50.31 | | -44.74 |
| | | | | SDS | | -11.01 | -33.65 | | -35.46 |
| | | | | Triton-X 100 | | -2.53 | -20.06 | | -7.44 |

Looking at Tables 1 to 4, it could be confirmed that Examples 1 to 8 were separation membranes with excellent fouling resistance that showed excellent fluxes and polyethylene glycol exclusion rates even under a polyethylene glycol solution, and had excellent fouling resistance due to a low flux reduction rate.

In addition, Example 2 showed excellent physical properties, but when compared to Example 1, it was confirmed that the physical properties were somewhat poor.

On the other hand, it could be confirmed that Comparative Example 1 including less than 0.002 wt.% of the sulfonated polymer in the mixed polymer had a very poor flux reduction rate, and it could be confirmed that Comparative Examples 2 and 3 including more than 0.500 wt.% had very low polyethylene glycol exclusion rates.

In addition, when the sulfonation degree of the sulfonated polymer was less than 0.25, it could be confirmed that the flux reduction rate increased and the fouling resistance was poor, and in Comparative Example 5 in which the sulfonation degree exceeded 0.50, it was confirmed that the polyethylene glycol exclusion rate was poor.

In addition, it could be confirmed that Comparative Example 6, in which the content of the mixed polymer in the mixed polymer solution was less than 20 wt.%, had a poor exclusion rate and a large flux reduction rate such that the fouling resistance of the separation membrane was poor, and in Comparative Example 7 in which it exceeded 36 wt.%, all physical properties could not be measured, because it was impossible to form a separation membrane.

In addition, it could be confirmed that Comparative Example 8, in which the hydrophobic polymer was included at less than 85 wt.% in the mixed polymer, had a high flux, and the physical properties of salt exclusion rate and fouling resistance were poor.

Although one exemplary embodiment of the present invention has been described above, the spirit of the present invention is not limited to the exemplary embodiments presented herein, and those skilled in the art who understand the spirit of the present invention may easily suggest other exemplary embodiments by changing, modifying, deleting or adding components within the scope of the same spirit, but this will also fall within the scope of the present invention.

## Claims

1. A separation membrane with excellent fouling resistance, comprising:
a support; and a coating film which is formed on at least one surface of the support,
wherein the coating film comprises a mixed polymer comprising a hydrophobic polymer, a sulfonated polymer and a hydrophilic polymer,
wherein the sulfonated polymer is comprised in the mixed polymer at 0.002 to 0.500 wt.%, and
wherein when operated for 50 to 70 minutes under a polyethylene glycol solution with a concentration of 100 to 5,000 ppm at a temperature of 20°C to 30°C and a pressure of 40 to 60 psi, the separation membrane has a flux of 63 gfd (gal/ft²·day) or more and a polyethylene glycol exclusion rate of 90% or more.

2. The separation membrane of claim 1, wherein the sulfonated polymer comprises at least one selected from sulfonated polysulfone and sulfonated polyethersulfone.

3. The separation membrane of claim 1, wherein the hydrophobic polymer comprises at least one selected from polysulfone and polyethersulfone.

4. The separation membrane of claim 1, wherein the hydrophilic polymer comprises at least one selected from polyethylene glycol and polyvinyl pyrrolidone.

5. The separation membrane of claim 1, wherein the separation membrane is a nano-separation membrane, an ultrafiltration separation membrane or a microfiltration separation membrane.

6. The separation membrane of claim 1, wherein the upper surface contact angle of the separation membrane is 20° to 50°.

7. The separation membrane of claim 1, wherein the hydrophobic polymer is comprised at 85 to 95 wt.% of the total weight of the mixed polymer.

8. A method for manufacturing a separation membrane with excellent fouling resistance, comprising the steps of:
preparing a polymer solution comprising a mixed polymer comprising a hydrophobic polymer, a sulfonated polymer and a hydrophilic polymer, and a solvent;
forming a coating film by coating at least one surface of the support with the polymer solution and then immersing in distilled water; and
drying the support on which the coating film is formed.

9. The method of claim 8, wherein the solvent comprises at least one selected from dimethylacetamide, N-methyl-2-pyrrolidone, dimethylformamide and dimethyl sulfoxide.

10. The method of claim 8, wherein the sulfonated polymer has a sulfonation degree of 0.25 to 0.50.
